# NOUVEAU FASCICULE DE BREVET EUROPEEN

(11) **EP 0 545 890 B2**
(45) Date de publication et mention de la décision concernant l'opposition: **12.06.2002**
(45) Mention de la délivrance du brevet: 26.06.1996
(21) Numéro de dépôt: 93100241.4
(22) Date de dépôt: 09.03.1989
(51) Int. Cl.: C13F 3/00, C13F 1/00, A23L 1/236

(54) **Produits à base de saccharose contenant des édulcorants à haut pouvoir sucrant et procédés pour leur obtention**
Kräftige Süssstoffe enthaltende Produkte auf Grund der Saccharose und Verfahren zu ihrer Herstellung
Saccharose based products containing high potency sweeteners and process for making the same

(30) Priorité: 30.03.1988 BE 8800371
(43) Date de publication de la demande: 09.06.1993
(62) Demande divisionnaire de: 89870039.8
(73) Titulaire: RAFFINERIE TIRLEMONTOISE, 1150 Bruxelles (BE)
(72) Inventeur: Daenekindt, Luc, B-9308 Gijzegem, Aalst (BE); Smits, Georges, B-9308 Gijzegem, Aalst (BE)
(74) Mandataire: Van Malderen, Michel

(56) Documents cités:
- EP-A- 0 036 738
- EP-A- 0 052 919
- EP-A- 0 102 032
- EP-A- 0 106 910
- EP-A- 0 218 570
- EP-A- 0 219 150
- EP-A- 0 334 617
- WO-A-86/06747
- US-A- 3 615 723
- US-A- 4 657 767
- Sonderdruck "Rüben- und Rohrzucker" aus Ullmanns Enzyklopädie der technischen Chemie, 4. Auflage, 1984, Band 24, Seite 731
- Produktspezifikation "Puderzucker" der Firma Pfeifer & Langen

## Description

### Objet de l'invention

La présente invention concerne un procédé de préparation de produits sous forme de poudre à base de saccharose et les produits ainsi obtenus.

### Résumé de l'état de la technique et buts visés par l'invention

On sait que pour des raisons diététiques ou médicales, il peut être souhaitable de remplacer une partie du saccharose dans l'alimentation par des substances édulcorantes à haut pouvoir sucrant.

La substitution totale du saccharose par des édulcorants ne satisfait pas totalement le consommateur qui souhaite retrouver dans le produit qu'il utilise le goût du sucre naturel auquel il est habitué. Une solution satisfaisante a été trouvée pour le sucre en morceaux par une formule dite allégée qui réduit d'un facteur de l'ordre de 75% l'apport calorique comparé à un morceau de sucre classique de même pouvoir sucrant.

Divers exemples de tels produits dits allégés, se composant de saccharose et d'un ou plusieurs édulcorants artificiels, se présentant sous forme de morceaux sont décrits dans les documents suivants: EP-A-0 219 150, WO-A-86 06 747, EP-A-0 106 910 et EP-A-0 218 570.

Dans le cas du sucre alimentaire dit "en poudre", l'utilisateur souhaite cependant garder ses habitudes de consommation et il serait souhaitable de disposer d'un produit sous une telle forme en poudre, qui, pour une unité volumétrique identique à celle du saccharose, présente le même pouvoir sucrant mais qui contiendrait moins de saccharose. Pour un volume pratiquement identique, le pouvoir calorique d'un tel produit serait donc réduit d'une valeur d'au moins 30% et de préférence de l'ordre de 75% par rapport au sucre habituel du commerce qui est pratiquement constitué totalement de saccharose, exception faite de certains produits résiduels.

Seul le document EP-A-0 052 919 décrit un produit composé de saccharose et associé éventuellement à un édulcorant qui se présente sous forme d'une poudre convenablement conditionnée pour se dissoudre de manière facile et rapide dans l'eau. Cependant, ce produit ne présente pas le même pouvoir sucrant par unité volumétrique que le sucre en poudre du commerce et ne convient donc pas au but poursuivi par la présente invention.

On connaît également un produit sous forme de poudre qui est décrit dans le document EP-A-0 036 738 qui est caractérisé effectivement par une densité plus faible que celle du sucre du commerce. Cependant, ce produit est essentiellement composé de fructose, de dextrose et de sucrose et ne présente donc pas un pouvoir calorifique nettement moins élevé que celui du sucre du commerce. De ce fait, il ne convient pas pour le but poursuivi par la présente invention.

### Eléments caractéristiques de l'invention

Le but ainsi visé est atteint selon l'invention par un procédé selon la revendication 1 résultant en un produit selon les revendications 4 à 6 étant un produit sous forme de poudre contenant au moins 50 % de saccharose, d'une densité apparente comprise entre 20 % et 70 %, de préférence comprise entre 25 % et 50 % de la densité apparente du sucre en poudre du commerce, auquel est additionnée une quantité d'adjuvants constitués d'édulcorants à haut pouvoir sucrant et d'autres produits sucrants que le saccharose, de manière que le produit présente globalement par unité volumétrique le même pouvoir sucrant que le sucre en poudre du commerce.

Lesdits produits sucrants non artificiels autres que le saccharose sont constitués par des maltodextrines.

De préférence, on utilise des malodextrines obtenues par hydrolyse partielle d'une solution aqueuse d'amidon dont le ED est compris entre 2 et 20. Le ED est la mesure de la quantité totale de sucres réducteurs dans un hydrolysat d'amidon qui est calculée comme dextrose et exprimée comme pourcentage sur la matière sèche totale, le dextrose ayant un ED égal à 100 et l'amidon un ED égal à 0.

On sait qu'il existe un certain nombre d'édulcorants dits de synthèse se caractérisant par un pouvoir sucrant élevé. Ils sont vendus entr'autres sous les dénominations commerciales ou les marques enregistrées suivantes : Aspartame, Acesulfame-K, Sucralose, Alitame. Leur pouvoir sucrant est particulièrement élevé et ils doivent donc être ajoutes en quantités très faibles dans le produit de l'invention. Leur contribution à la densité apparente du produit résultant est donc très faible et peut donc être considéré comme négligeable.

En pratique, la condition à remplir est donc que la contribution des édulcorants à haut pouvoir sucrant au pouvoir sucrant du produit final, s'ajoutant à celui obtenu par la présence dans le produit d'au moins 50 % de saccharose et obtenu par la présence d'autres produits sucrants non artificiels, soit telle que le produit final présente, le même pouvoir sucrant que le même-volume unitaire de sucre en poudré du commerce.

Ceci rend donc nécessaire de conférer, tout en gardant le caractère d'une poudre granuleuse, aux constituants non artificiels (à savoir le saccharose et lesdits autres produits sucrants), une densité apparente plus réduite.

La demanderesse a donc été amenée à mettre au point un procédé pour l'obtention de tels produits.

Selon l'invention, on propose un procédé qui permet d'obtenir un produit qui est caractérisé par la présence de maltodextrine. La technique mise en oeuvre consiste à préparer une solution contenant la maltodextrine, l'édulcorant à haut pouvoir sucrant et une partie du sucre que doit contenir le produit final et à injecter le produit en présence de CO₂ dans un atomiseur du type Fluidized Spray Dryer (FSD). La solution saturée en CO₂ sous pression qui est alimentée dans l'installation subit une expansion brutale en formant un brouillard de fines gouttelettes qui sont ensuite séchées.

Les gouttelettes (particules) sont ensuite enrobées de la quantité résiduaire de saccharose de préférence sous forme de sucre dit "impalpable". On peut obtenir de cette manière un produit présentant une densité apparente de l'ordre de 20 à 40 % du sucre cristallisé du commerce. Les procédés de mise en oeuvre permettant d'obtenir le produit de l'invention seront décrits plus en détail à l'aide de deux exemples et en référence respectivement aux deux figures annexées qui représentent chacune schématiquement l'installation convenant pour l'invention.

### Exemple 1

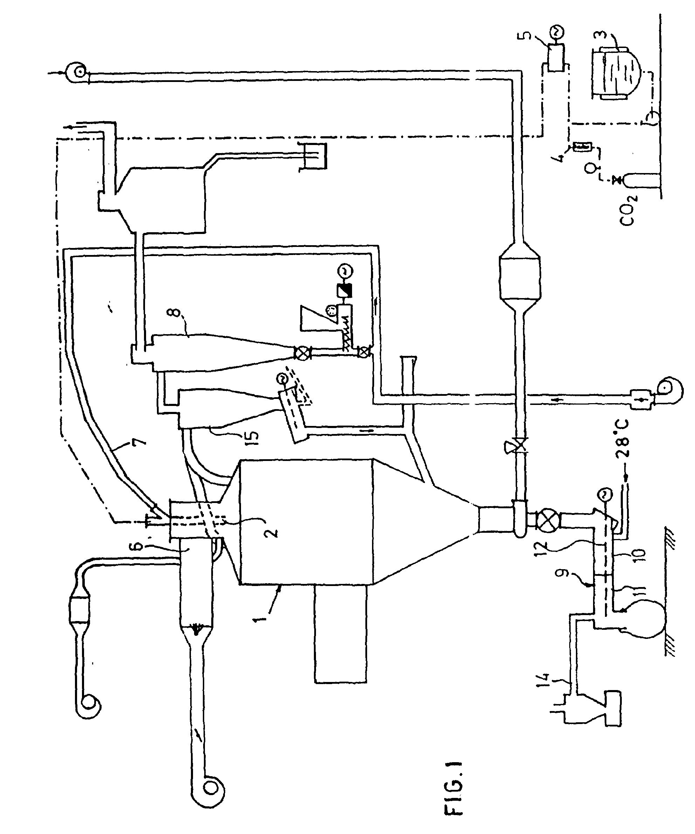

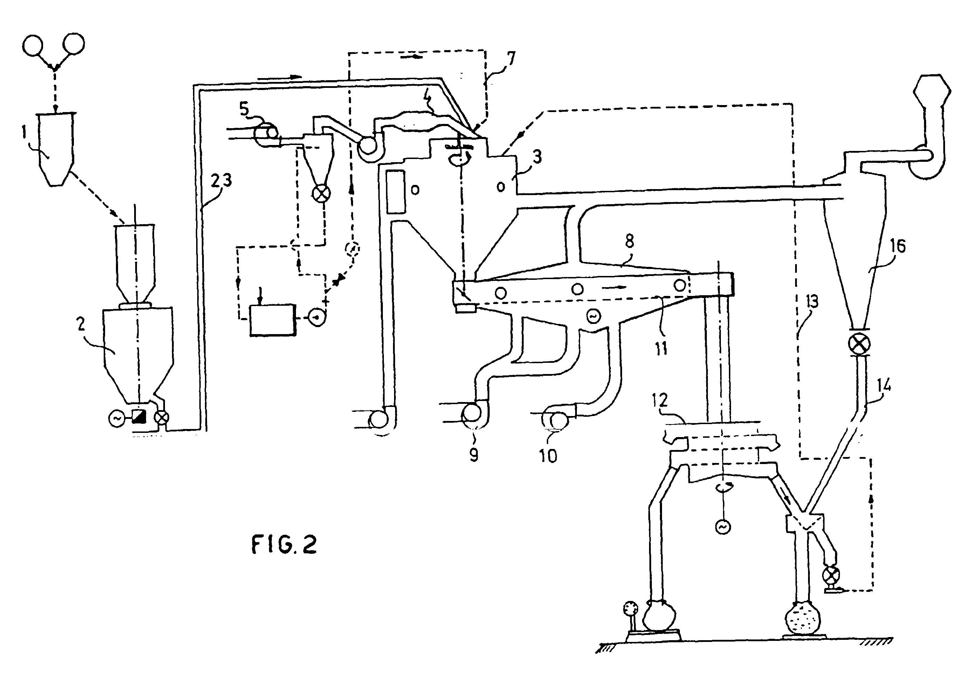

Le procédé de production est représenté schématiquement à la figure 1. La préparation s'effectue dans un Fluidized Spray Dryer 1 dans lequel est alimentée une solution via un ajutage. L'alimentation de l'ajutage 2 se fait au départ d'une solution prélevée d'un réservoir d'alimentation 3 avec injection de CO₂ à l'aide d'une unité Sparger 4 et par passage par une pompe à haute pression 5. L'ajutage 2 est disposé au centre du distributeur d'air au sommet de la chambre de séchage.

A l'aide du distributeur d'air 6, le courant d'air principal est dirigé vers le bas. On amène autour du distributeur d'air et de l'ajutage, de l'air de refroidissement afin de protéger la partie supérieure du réacteur et l'ajutage de l'air chaud. Par le conduit 7, du sucre impalpable sec est alimenté en même temps que des matières fines qui sont prélevées dans le deuxième cyclone 8 autour de l'ajutage à la partie supérieure de la chambre de séchage. Le produit pulvérisé est partiellement séché dans la chambre et est amené vers un lit fluidisé statique 9 pour poursuivre le séchage et réaliser une agglomération dans la première zone sèche 10 . Le produit est ensuite fluidisé dans la seconde zone de séchage 11 à l'aide d'air qui est injecté à travers una paroi perforée 12 . L'air sec de la première et de la deuxième zone de séchage quitte la chambre par deux ouvertures 13 et 14 qui se trouvent à la partie supérieure de la chambre. Les fines particules sont séparées de l'air à l'aide des cyclones 15 et 8 et sont recyclées.

Dans cette forme d'exécution, il est nécessaire d'utiliser de la maltodextrine afin de former les parois des particules expansées par le CO₂. En effet, lorsque les particules sont formées, l'adjonction de sucre réduit la résistance des parois et, pour une certaine concentration en sucre, ces parois ne présenteraient plus une résistance suffisante pour former des particules avec une densité suffisamment basse. La maltodextrine sert à renforcer ces parois. Plus la valeur ED de la maltodextrine est basse, plus la quantité de sucre pouvant être ajoutée ultérieurement sous forme impalpable est élevée. Pour des raisons gustatives, en particulier pour éviter un goût de "carton" observé pour les maltodextrines à indice ED faible, due à la présence de graisses résiduelles, on choisit de préférence une maltodextrine raffinée avec une valeur ED comprise entre 10 et 20. A titre d'illustration, un produit final contenant 51% de sucre et présentant une densité apparente de 22% comparé au sucre du commerce a pu être préparée de la manière suivante.

L'alimentation est constituée par 41,3 kg d'eau, 50 kg de maltodextrine (48 kg de matières sèches), 7,7 kg de sucre impalpable ainsi que la quantité nécessaire d'édulcorant. Pour 100 kg de cette préparation, on ajoute de manière dosée 43,3 kg ce sucre impalpable. La quantité de CO₂ ajoutée exerce un grand effet sur la densité apparente. Une réduction du débit de cO₂ de 45 % à 8 % entraîne un accroissement de la densité apparente jusqu'à 32%. La quantité d'édulcorant à fort pouvoir sucrant qui doit être ajoutée dépend du pouvoir sucrant propre de ce produit et de la densité apparente du produit que l'on envisage d'obtenir.

On peut également préparer un produit constitué de 60 % de saccharose au départ de la préparation suivante 50 kg d'eau. 42 kg de maltodextrine (40 kg de matières sèches), 9 kg de sucre et des édulcorants à fort pouvoir sucrant Pour 100 kg de cette préparation. on ajoute de manière dosée 51 kg de sucre en poudre sec. On obtient un produit présentant une densité apparente de 25%.

L'intérêt du technique décrit est d'obtenir une produit de bonne granulométrie. présentant des qualités satisfaisantes du point de vue de la coulabilité (free flowing). Ces produits, qui sont nettement moins caloriques par unité volumétrique que le sucre du commerce, sont en ce qui concerne l'aspect, le goût, le caractère sucrant et l'impression gustative comparables au sucre cristallin.

## Revendications

1. Procédé d'obtention de produits sous forme de poudre contenant au moins 50 % de saccharose, d'une densité apparente comprise entre 20 % et 70 %, de préférence comprise ente 20 % et 50 % de la densité apparente du sucre en poudre du commerce, auquel est additionnée une quantité d'adjuvants constitués totalement ou partiellement d'édulcorants à haut pouvoir sucrant et éventuellement d'autres produits sucrants que le saccharose, de manière que les produits présentent par unité volumétrique le même pouvoir sucrant que le sucre en poudre du commerce, **caractérisé en ce que** l'on prépare une solution contenant de la maltodextrine, un édulcorant à haut pouvoir sucrant et une partie du sucre que doit contenir les produits finaux et l'injecte en présence de CO₂ dans un atomiseur de type Fluidized Spray Dryer (FSD) où elle subit une expansion brutale en formant un brouillard de fines particules/gouttes, après quoi la quantité résiduelle de saccharose est ensuite enrobée sous forme de sucre dit "impalpable" autour des particules/gouttelettes.

2. Procédé selon la revendication 1, **caractérisé en ce que** l'on obtient des produits présentant une densité apparente de l'ordre de 20 % à 40 % du sucre cristallisé du commerce.

3. Procédé selon la revendication 1 ou 2, **caractérisé en ce que** l'on utilise de la maltodextrine obtenue par hydrolyse partielle d'une solution aqueuse d'amidon, dont le ED est compris entre 2 et 20.

4. Produits sous forme de poudre obtenus par le procédé d'une quelconque des revendications 1 à 3 contenant au moins 50 % de saccharose et une quantité d'adjuvant constituée d'édulcorants à haut pouvoir sucrant et de maltodextrine **caractérisés en ce que** leur densité apparente est comprise entre 20 % et 70 % de la densité apparente du sucre en poudre du commerce et qu'ils présentent par unité volumétrique le même pouvoir sucrant que le sucre en poudre du commerce.

5. Produits sous forme de poudre selon la revendication 4, d'une densité apparente comprise entre 25 % et 50% de la densité apparente du sucre en poudre du commerce.

6. Produits selon la revendication 4 ou 5, **caractérisés en ce que** la maltodextrine est obtenue par hydrolyse partielle d'une solution aqueuse d'amidon, dont le ED est compris entre 2 et 20,

## Patentansprüche

1. Verfahren zur Herstellung von Produkten in Form von Puder, die mindestens 50 % Saccharose enthalten, und eine zwischen 20 % und 70 %, vorzugsweise 20 % und 50 % der Fülldichte des handelsüblichen Puderzuckers liegende Fülldichte haben, wobei zu diesen Produkten eine bestimmte Menge von ganz oder teilweise aus Süßstoffen mit hoher Süßkraft und eventuell anderen süßenden Produkten als Saccharose bestehenden Zusatzstoffen hinzugegeben wird, so daß die Produkte die gleiche Süßkraft pro Volumeneinheit wie der handelsübliche Puderzucker aufweisen, **dadurch gekennzeichnet, daß** eine Lösung hergestellt wird, die Maltose-Dextrin, einen Süßstoff mit hoher Süßkraft, und einen Teil des Zuckers, den die Endprodukte enthalten sollen, enthält, und diese Lösung bei Anwesenheit von CO₂ in einen Zerstäuber vom Typ Fluidized Spray Dryer (FSD) injiziert wird, wo sie eine plötzliche Expansion erleidet, bei der ein Nebel aus feinen Partikeln/Tropfen gebildet wird, wonach die restliche Menge der Saccharose in Form von sogenanntem Puderzucker als Überzug auf die Partikel/Tröpfchen aufgebracht wird.

2. Verfahren gemäß Anspruch 1, **dadurch gekennzeichnet, daß** Produkte enthalten werden, die eine Fülldichte von ungefähr 20 % bis 40 % handelsüblichen kristallisierten Zuckers aufweisen.

3. Verfahren gemäß Anspruch 1 oder 2, **dadurch gekennzeichnet, daß** Maltose-Dextrin verwendet wird, das durch partielle Hydrolyse einer wässerigen Stärkelösung, deren DE zwischen 2 und 20 liegt, enthalten wird.

4. Produkte in Form von Puder, erhalten durch das Verfahren gemäß irgendeiner der Ansprüche 1 bis 3, die mindestens 50 % Saccharose und eine Menge von Zusatzstoffen, bestehend aus Süßstoffen mit hoher Süßkraft, enthalten, **dadurch gekennzeichnet, daß** deren Fülldichte zwischen 20 % und 70 % der Fülldichte des handelsüblichen Puderzuckers liegt und daß sie die gleiche Süßkraft pro Volumeneinheit wie der handelsübliche Puderzucker aufweisen.

5. Produkte in Form von Puder gemäß Anspruch 4, mit einer zwischen 25 % und 50 % der Fülldichte des handelsüblichen Puderzuckers liegenden Fülldichte.

6. Produkte gemäß Anspruch 4 oder 5, **dadurch gekennzeichnet, daß** das Maltose-Dextrin durch partielle Hydrolyse einer wässerigen Stärkelösung, deren DE zwischen 2 und 20 liegt, erhalten wird.

## Claims

1. Process for obtaining products as a powder containing at least 50% saccharose, having a bulk density comprised between 20% and 70%, preferably between 20% and 50% of the bulk density of commercially available powder sugar, to which is added a quantity of additives totally or partially comprising high sweetening power sweeteners and optionally other sweetening products than saccharose, so that the products have per volume unit the same sweetening power as commercially available powder sugar, **characterized in that** a solution containing maltodextrine, a high sweetening power sweetener and a part of the sugar that the final products are to contain is prepared and injected, in presence of CO₂, into a Fluidized Spray Dryer (FSD) type atomizer where it is submitted to a rapid expansion, forming a mist of fine particles/droplets, after what the residue quantity of saccharose is then coated as an icing sugar around the particles/droplets.

2. Process according to claim 1 **characterized in that** products having a bulk density of about 20% to 40% of commercially available granulated sugar are obtained.

3. Process according to claim 1 or 2, **characterized in that** maltodextrine obtained by partial hydrolysis of an aqueous starch solution is added, the ED of which is comprised between 2 and 20 %.

4. Products as a powder obtained by the process of any of the claims 1 to 3 containing at least 50% saccharose and a quantity of additive consisting in high sweetening power sweeteners and maltodextrine **characterized in that** their bulk density is comprised between 20% and 70% of the bulk density of commercially available powder sugar and that they have per volume unit the same sweetening power as commercially available powder sugar.

5. Products as a powder according to claim 4, having a bulk density between 25% and 50% of the bulk density of commercially available powder sugar.

6. Products according to claim 4 or 5, **characterized in that** maltodextrine is obtained by partial hydrolysis of an aqueous starch solution, the ED of which is comprised between 2 and 20.
